# FASCICULE DE BREVET EUROPEEN

(11) **EP 3 824 064 B1**
(45) Date de publication et mention de la délivrance du brevet: **13.07.2022**
(21) Numéro de dépôt: 19752735.1
(22) Date de dépôt: 16.07.2019
(51) Int. Cl.: C12G 1/02, C12H 1/22

(54) **CONTENANT POUR LIQUIDE ALIMENTAIRE, NOTAMMENT POUR L'ÉLABORATION ET L'ÉLEVAGE DE VIN ET SPIRITUEUX**
BEHÄLTER FÜR EINE LEBENSMITTELFLÜSSIGKEIT, INSBESONDERE ZUR HERSTELLUNG UND ZUR ALTERUNG VON WEIN UND SPIRITUOSEN
CONTAINER FOR A FOOD LIQUID, IN PARTICULAR FOR MAKING AND AGEING WINE AND SPIRITS

(30) Priorité: 17.07.2018 FR 1856590
(43) Date de publication de la demande: 26.05.2021
(73) Titulaire: Galileo SAS, 16200 Gondeville (FR)
(72) Inventeur: REBOREDO, Alejandro, MENDOZA, 5500 (AR); DEBONO, Didier, Vina Del Mar, 2520000 (CL); VERDIER, Benoît, 16200 GONDEVILLE (FR)
(74) Mandataire: Plasseraud IP
(86) Numéro de dépôt international: PCT/FR2019/051780
(87) Numéro de publication internationale: WO 2020/016518

(56) Documents cités:
- EP-A2- 1 785 553
- CH-A- 27 801
- FR-A- 328 410
- FR-A1- 2 982 275
- FR-A1- 3 019 831

## Description

### Domaine de l'invention

La présente invention a trait à un contenant destiné à contenir des produits liquides tels que du vin ou des spiritueux, ou encore granulaires tels que des denrées alimentaires.

Elle concerne également un moule pour la réalisation de parties constitutives du corps de ce contenant.

### Arrière-plan technologique

Des cuves pour la vinification, l'élevage et le stockage du vin sont connues.

Ces cuves peuvent être réalisées en acier inoxydable, en béton, en plastique ou dans des bois nobles tels que le chêne, afin de conférer au vin, dans ce dernier cas, des qualités gustatives durant la phase d'élevage.

Il est connu que les cuves en béton présentent l'avantage d'offrir une bonne inertie thermique. Elles autorisent ainsi un maintien des températures stables dans le vin sans requérir de dépenses énergétiques élevées.

Il est également moins onéreux que d'autres matériaux utilisés dans la fabrication de cuve, tels que des bois nobles ou l'inox.

En outre, le béton est un matériau neutre par excellence pour le liquide alimentaire avec lequel il est en contact prolongé. Il est donc particulièrement prisé lorsqu'aucune influence directe de la cuve sur le liquide alimentaire n'est recherchée lors de son séjour dans celle-ci.

Le béton est également très résistant et adapté au vieillissement de la cuve.

On connaît également des cuves en béton de forme sphérique ou ovoïde. FR3019831 décrit un corps creux monolithique qui est en forme d'ovoïde inversée. FR2982275 concerne une cuve ovoïde en béton et EP1785553 décrit un contenant béton pré-moulé pour stocker du vin ou d'autres liquides, avec système derégulation de la température.

En plus d'un aspect esthétique indéniable, la forme sphérique d'une cuve présente plusieurs avantages.

Elle favorise des mouvements de convection dans la cuve, ce qui assure une homogénéisation permanente de son contenu ainsi qu'une distribution égale des températures.

Elles offrent également des volumes de stockage élevés. Toutefois, on observe que la fabrication de ces cuves en béton reste longue et particulièrement complexe.

Il en résulte des coûts de fabrication élevés.

De plus, ces cuves sphériques qui sont destinées à recevoir des liquides alimentaires, doivent également respectées des conditions d'étanchéité élevées, lesquelles sont aujourd'hui difficiles à atteindre sans la pose d'un revêtement intérieur.

Il n'est pas rare de constater, suite à l'entretien de ces cuves, une détérioration de ce revêtement entraînant une perte d'étanchéité.

Il existe donc un besoin pressant pour une cuve en béton sphérique dont la conception originale assure un montage facilité et une meilleure étanchéité.

### Objet de l'invention

La présente invention vise à pallier les inconvénients de l'art antérieur en proposant une cuve en béton sphérique, simple dans sa conception et dans son mode opératoire, d'une fabrication particulièrement aisée et économique, ne nécessitant aucun traitement préalable de ses parois tout en offrant une étanchéité améliorée.

Un objectif de la présente invention est également une telle cuve en béton sphérique résistante dans le temps.

Un autre objectif de la présente invention est une telle cuve en béton sphérique offrant diverses fonctionnalités notamment de caractérisation et de suivi du liquide alimentaire séjournant dans cette cuve.

La présente invention concerne aussi un moule pour la réalisation de parties constitutives du corps de cette cuve en béton sphérique, ce moule étant particulièrement simple dans sa mise en œuvre tout en autorisant l'obtention de surfaces lisses pour les parois internes de cette cuve.

### BREVE DESCRIPTION DE L'INVENTION

A cet effet, l'invention concerne un contenant en béton pour liquide alimentaire, notamment pour l'élaboration et l'élevage de vin et de spiritueux, ce contenant comportant un corps de contenant qui est symétrique de révolution, ledit corps de contenant comportant une paroi intérieure délimitant le volume de stockage dudit contenant et une paroi périphérique externe.

Selon l'invention,
- ce corps de contenant comprend une première partie de corps et une seconde partie de corps, lesquelles sont superposées et assemblées pour fermer ledit corps de contenant,
- chaque partie de corps comprenant une surface d'assemblage avec l'autre partie de corps, ces surfaces d'assemblage sont placées en regard l'une de l'autre, ces surfaces d'assemblage comportant au moins :
- des premières surfaces d'assemblage placées du côté de ladite paroi intérieure, ces premières surfaces présentant des profils conjugués l'un de l'autre pour assurer un contact continu entre elles, et
- ces premières surfaces d'assemblage sont prolongées en allant vers l'extérieur dudit contenant par des secondes surfaces d'assemblage configurées pour définir entre ces secondes surfaces d'assemblage, un espace intérieur débouchant ou non sur la paroi périphérique externe du corps de contenant.

Ce contenant peut donc être une cuve en béton sphérique, ovoïde ou encore cylindrosphérique.

Le corps du contenant résulte donc de l'assemblage de deux parties de corps qui sont, par exemple, des hémisphères dans le cas d'un contenant de forme sphérique.

Bien que chaque partie de corps est, de préférence, d'une seule pièce, ou encore d'un seul tenant, afin d'assurer une parfaite étanchéité, l'invention n'est pas limitée à ce mode de réalisation. Chaque partie de corps peut résulter lui-même de l'assemblage de sous-ensembles, par exemple de moitiés ou encore de quarts de partie de contenant.

De préférence, ces première partie et seconde partie de corps du contenant qui sont superposées pour leur assemblage, sont configurées pour assurer un assemblage par engagement par translation.

Avantageusement, lorsque les deux parties de corps sont assemblées pour former le contenant, un appui d'une première surface d'une première partie de corps sur la première surface de l'autre partie de corps est obtenu, cette surface de contact continu étant placée côté intérieur au contenant pour former une barrière réduisant le contact colle ou bague d'étanchéité / vin.

Bien entendu, l'assemblage de ces deux parties de corps qui forment ainsi le corps de contenant, délimite un volume intérieur, ou interne, de stockage de produits liquides.

Dans différents modes de réalisation particuliers de ce contenant, chacun ayant ses avantages particuliers et susceptibles de nombreuses combinaisons techniques possibles:
- une colle d'assemblage est disposée dans cet espace intérieur. De manière avantageuse, cette colle d'assemblage est une colle apte au contact alimentaire. De manière préférentielle, cette colle est particulièrement adaptée au contact alimentaire avec le liquide alimentaire destiné à être contenu dans la cuve.

Alternativement, un élément d'étanchéité peut être placé dans cet espace intérieur. Eventuellement l'espace intérieur est adapté à la forme de l'élément d'étanchéité tel qu'une bague d'étanchéité. A titre d'exemple, cet espace intérieur présente une forme rectangulaire en coupe ou section transversale du contenant.
- ladite paroi périphérique externe dudit contenant comporte au moins une rainure circonférentielle, ladite au moins une rainure étant placée au niveau desdites surfaces d'assemblage en définissant un logement, chaque logement recevant un moyen de serrage, de préférence amovible, tel qu'un cerclage, pour l'assemblage des deux parties de corps.

Dans le cas d'une cuve sphérique, cette rainure circonférentielle présente donc une forme annulaire. Ainsi, et de manière avantageuse, cette rainure circonférentielle peut être placée au niveau des sections équatoriales des hémisphères.
- ledit corps du contenant est sphérique.

Chaque partie de corps a donc une forme hémisphérique et les surfaces d'assemblage sont annulaires.
- une première surface d'une première partie de corps est en creux ou en retrait par rapport à sa seconde surface tandis que la première surface de l'autre partie de corps est en saillie par rapport à sa seconde surface, la première surface en saillie ayant un profil conjugué de celui de ladite première surface en creux de manière à coopérer avec cette première surface en creux pour l'assemblage desdites parties de corps,
- lesdites premières surfaces sont en coupe, ou section, transversale dudit contenant, en forme de marche ou de forme ondulée. Cette coupe transversale du contenant est celle obtenue par un plan vertical passant par ce contenant lorsque ce dernier repose sur un sol plan.
- lesdites surfaces d'assemblage sont configurées de sorte qu'au moins les parois intérieures desdites parties de corps sont affleurantes de manière à assurer la continuité de ladite paroi intérieure dudit contenant.

De manière avantageuse, cette paroi intérieure est continue de sorte qu'elle ne présente pas de relief de surface susceptible de constituer une surface d'accroche difficile à nettoyer pour la souillure. Il est en effet nécessaire d'enlever cette souillure efficacement pour éviter toute prolifération bactérienne susceptible de conférer un mauvais goût au produit liquide contenu dans le contenant. Une meilleure hygiène du contenant est ainsi assurée.
- ce contenant comporte un ou plusieurs conduits pour la circulation d'un fluide de refroidissement et/ou d'un fluide chaud disposés au moins en partie sur la surface externe de chaque partie de corps et/ou intégrés au moins en partie dans l'épaisseur de chaque partie de corps,
- ce contenant comprend un ou plusieurs éléments choisis dans le groupe comprenant un capteur, un capteur de température, une conduite d'un circuit d'alimentation en fluide chauffant ou de refroidissement, ces éléments étant de préférence intégrés dans l'épaisseur de chaque partie de corps

La présente invention concerne également un ensemble comprenant un contenant tel que décrit précédemment et un socle pour supporter le corps dudit contenant, ce socle ayant une section transversale triangulaire.

Ce socle comporte une forme évasée, sa base ou partie inférieure triangulaire se prolongeant vers son extrémité supérieure par une forme pyramidale tronquée.

Alternativement, la présente invention concerne aussi un ensemble pivotant comprenant :
- un contenant tel que décrit précédemment,
- un dispositif d'entrainement en rotation de ce contenant,
- un ou plusieurs éléments de guidage en rotation d'au moins un dispositif de couplage solidaire de la paroi périphérique externe du corps de ce contenant et
- une base pour supporter en rotation ledit contenant et recevoir ledit au moins un dispositif d'entraînement en rotation.

De manière avantageuse, chaque dispositif de couplage comprend un anneau de prise et un bol central solidaire de cet anneau de prise, ce bol central comportant une portion d'assemblage avec la paroi périphérique externe du corps de contenant, ladite portion d'assemblage comprenant des éléments de centrage avec ou étant configurée pour épouser la portion de ladite paroi périphérique externe sur laquelle elle prend appui, deux dispositifs de couplage montés de part et d'autre dudit corps définissant un axe de rotation dudit contenant coïncidant avec le centre de chaque anneau de prise, ledit contenant comprenant une ouverture de décharge agencée sur ledit corps de sorte qu'au moins une partie du liquide contenu dans ledit contenant puisse être retiré lorsque ledit contenant est basculé autour dudit axe de rotation.

A titre d'exemple, ce contenant comporte deux dispositifs de couplage montés de part et d'autre dudit corps en étant agencés pour définir un axe horizontal ou sensiblement horizontal.

Selon un mode de réalisation de cet ensemble pivotant, ce dispositif d'entraînement comprend au moins une roue d'entrainement rotative comportant une gorge pour recevoir au moins le bord périphérique d'un anneau de prise et une unité motrice pour entraîner en rotation ladite roue d'entraînement rotative.

Selon un autre mode de réalisation de cet ensemble pivotant, le bord périphérique d'un anneau de prise comprenant un engrenage annulaire, ledit dispositif d'entraînement comprend un engrenage complémentaire coopérant avec l'engrenage annulaire dudit anneau de prise pour l'entraînement en rotation de ce dernier, ledit engrenage annulaire étant solidaire d'un arbre d'entraînement actionné par une unité motrice ou une manivelle.

Selon encore un autre mode de réalisation de cet ensemble pivotant, lesdits éléments de guidage en rotation sont choisis dans le groupe comprenant des roues rotatives comportant une gorge pour recevoir le bord périphérique d'un anneau de prise, des roues pleines rotatives et des combinaisons de ces éléments.

La présente invention concerne encore un moule pour la fabrication en béton d'une partie de corps du contenant tel que décrit précédemment.

Selon l'invention, ce moule comporte deux parois de moule hémisphériques et concentriques déterminant entre elles un espace intérieur pour recevoir du béton, lesdites parois de moule étant reliées entre elles au niveau de leur section la plus large, ou section équatoriale de chaque hémisphère, par un anneau de liaison, la face interne dudit anneau de liaison présentant un relief de surface configuré pour déterminer lesdites surfaces d'assemblage de ladite partie de moule correspondante.

Ce moule permet avantageusement d'obtenir directement des parois intérieures lisses. On entend, ici, par « lisse », une paroi qui est non poreuse. Il n'est donc pas nécessaire de reprendre la paroi intérieure de chaque partie de moule lors d'une étape de polissage par exemple.

Ce moule peut être réalisé en bois, en métal, en plastique ou en matériau composite tel qu'un composite à base d'élastomère chargé de fibres. A titre d'exemple, ce composite peut être un polyuréthane chargé de fibres de verre.

Il peut recevoir un revêtement facilitant le démoulage de la partie de corps et conférer une surface lisse à cette dernière. Ce revêtement peut être formé d'une ou plusieurs couches de peinture ou de vernis. Il peut encore s'agir d'une couche d'huile végétale.

Selon un mode de réalisation, la paroi de moule la plus externe comporte une ouverture pour l'introduction d'un béton liquide autoplaçant dans ledit espace.

De préférence, cette ouverture est placée à l'extrémité supérieure de la paroi de moule correspondante.

Selon un autre mode de réalisation, au moins lesdites deux parois de moule sont réalisées à partir d'une résine thermoplastique renforcée de fibres de verre.

Selon encore un autre mode de réalisation, ce moule étant un moule pour le moulage vibrant de produits en béton, il comporte une surface d'appui configurée pour assurer son support sur une table vibrante.

Selon encore un autre mode de réalisation, ce moule comporte un dispositif pour former un encadrement de porte dans la partie de corps de moule.
A titre d'exemple, ce dispositif comporte au moins un cadre configuré pour délimiter un orifice dans l'épaisseur de la paroi ainsi qu'au moins un élément de réservation destiné à être assemblé à ce cadre pour définir un encadrement de porte.

La présente invention concerne encore une composition de béton humide pour la fabrication d'une partie de corps du contenant tel que décrit précédemment, cette composition de béton étant constituée d'un liant hydraulique, de granulats pierreux de diamètre Dₘₐₓ inférieur ou égal à 6 mm, d'un renfort fibreux, de composés rigides allégeant et d'eau de gâchage. Cette composition peut également comporter un fluidifiant.

Selon un mode de réalisation, ce liant hydraulique est un ciment CEM I 42.5 du type Normal ou Réactif, i.e. présentant une résistance de 42,5 N/mm².

Selon un autre mode de réalisation, ce renfort fibreux comporte des fibres minérales.

De préférence, lesdites fibres minérales comprennent des fibres de verre courtes anti-rétraction et des fibres de verre longues pour le renfort structurel. De manière avantageuse, ces fibres de verre sont configurées pour être résistantes aux milieux chimiques et notamment aux milieux alcalins.

Selon encore un autre mode de réalisation, ces composés rigides allégeant sont de la perlite expansée et/ou des particules de liège expansé et/ou de l'argile expansé.

De préférence, ces composés présentent des dimensions régulières, ou relativement régulières, comprises entre 2 mm et 6 mm.

Les granulats pierreux peuvent comprendre, de manière connue, du sable et/ou des granulés.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels:
- la Figure 1 est une vue en perspective d'une cuve en béton sphérique selon un mode de réalisation particulier de la présente invention, un circuit de contrôle en température du contenu de cette cuve étant montré par transparence ;
- la Figure 2 est une vue côté de la cuve en béton sphérique de la Fig. 1 ;
- la Figure 3 est une vue en perspective du socle de la cuve en béton sphérique de la Fig. 1;
- la Figure 4 est une vue de profil du socle illustré à la Fig. 3 ;
- la Figure 5 représente schématiquement un moule utilisé pour obtenir un hémisphère de la cuve en béton sphérique de la Fig. 1, selon un mode de réalisation particulier de la présente invention ;
- la Figure 6 est une vue partielle et élargie de l'anneau reliant les parois du moule de la Fig. 5, la surface intérieure de cet anneau déterminant la surface d'assemblage de cet hémisphère ;

### DESCRIPTION DETAILLEE DE MODE DE REALISATION DE L'INVENTION

Tout d'abord, on note que les figures ne sont pas à l'échelle.

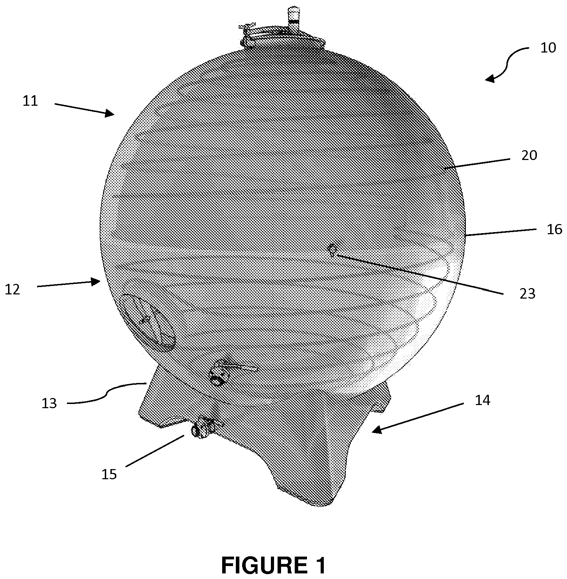

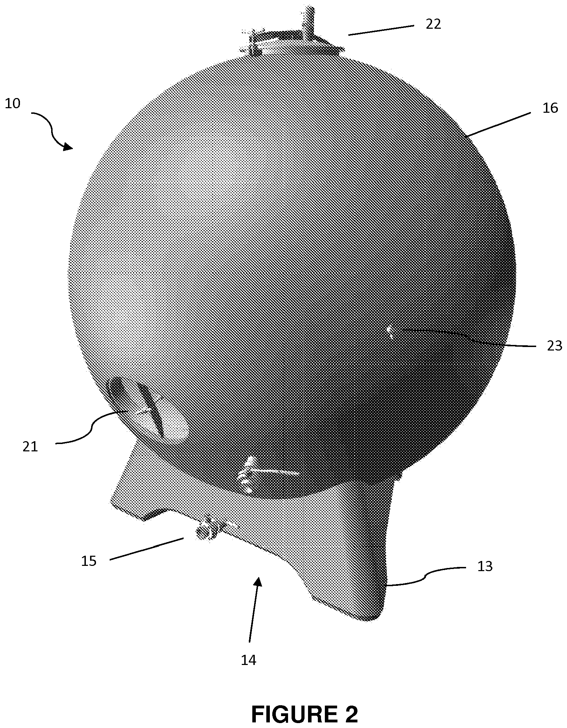

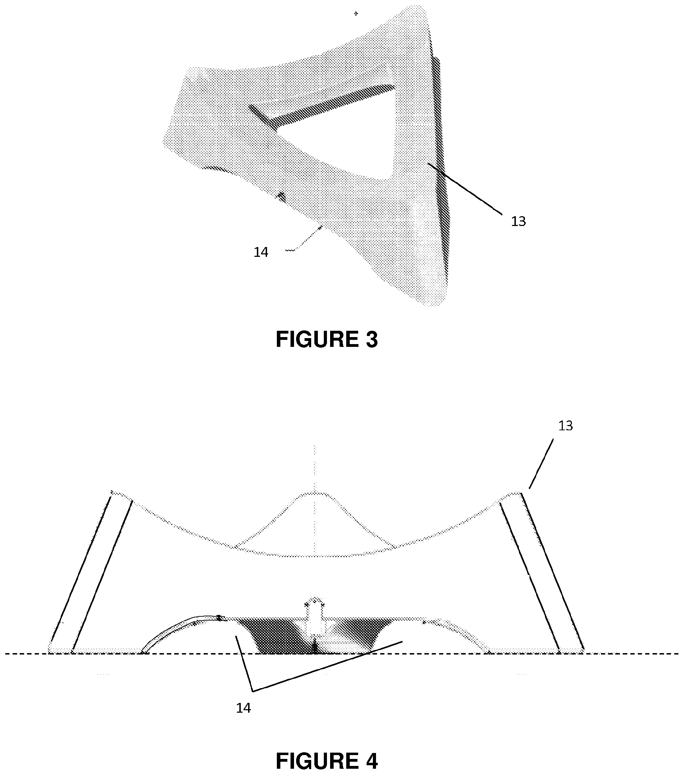

En relation avec les Figures 1 à 4, il est décrit une cuve 10 sphérique en béton selon un mode de réalisation particulier de la présente invention. Cette cuve béton sphérique 10 est avantageusement destinée à l'élaboration et à l'élevage de vin et de spiritueux.

Cette cuve 10 comporte un corps creux de cuve formé par l'assemblage de deux hémisphères 11, 12 en béton. Chaque hémisphère 11, 12 est d'une seule pièce afin de garantir une bonne étanchéité à cette cuve.

A titre purement illustratif, cette cuve 10 présente un volume nominal de 1500 L, une épaisseur de paroi de cuve de l'ordre de 8 cm pour un poids à vide de 1170 Kg.

Le corps de cette cuve est supporté par un socle 13. Ce socle 13 creux présente une base, ou partie inférieure, de forme triangulaire se prolongeant vers son extrémité supérieure par une forme pyramidale tronquée de sorte que cette dernière coïncide avec la forme sphérique de la cuve 10.

Ce socle 13 creux qui est ici réalisé en béton armé, est particulièrement résistant et stable. La base de ce socle 13 présente des évidements 14 pour recevoir les fourches d'une unité de transport telle qu'un transpalette. Ce socle 13 présente également une découpe pour le passage d'un robinet 15 de vidange de la cuve béton sphérique 10.

Le corps de cette cuve 10 présente une paroi intérieure délimitant un espace de réception de vin ou de spiritueux, cet espace de réception ayant une forme générale sphérique. Afin de favoriser le mouvement du liquide dans la cuve 10, cette paroi intérieure est entièrement lisse. La paroi périphérique externe 16 de cette cuve 10 est sphérique également.

Chaque partie de corps 11, 12 de forme hémisphérique comporte au niveau de sa section équatoriale une surface d'assemblage 17 avec l'autre partie de corps, laquelle est dirigée vers l'extérieur de sorte que les parties de corps 11, 12 étant superposées, ces surfaces d'assemblage 17 viennent en contact pour assurer un assemblage étanche de celles-ci. Ces surfaces 17 d'assemblage visent également à faciliter l'assemblage par emboitement des deux parties de corps 11, 12 pour former la cuve béton sphérique 10.

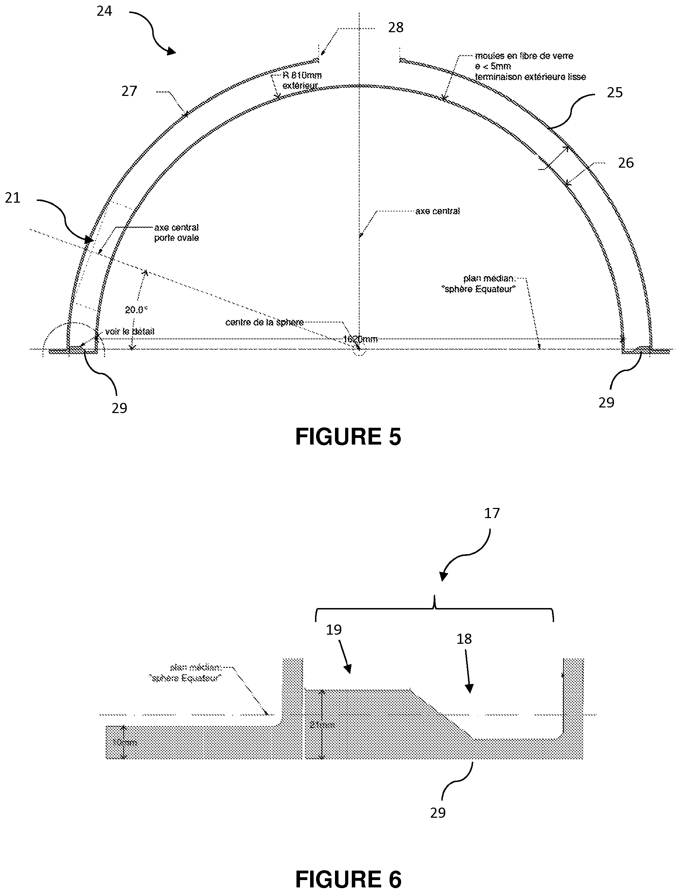

Comme illustré à la Figure 6, chaque surface d'assemblage 17 comporte une première surface d'assemblage 18 placée du côté de la paroi intérieure de la cuve 10, mais ne débouchant pas sur celle-ci. Chaque première surface d'assemblage 18 présente ici une forme de marche, ces premières surfaces d'assemblage 18 présentant des profils conjugués l'un de l'autre pour assurer un contact continu entre elles.

De manière avantageuse, ce profil non rectiligne de chaque première surface d'assemblage 18 permet d'augmenter les surfaces de contact entre les deux parties de corps 11, 12 et donc leur adhérence. Il favorise également l'assemblage par emboîtement ce qui facilite le positionnement de la partie de corps, ou hémisphère, supérieur 11.

Des secondes surfaces d'assemblage 19 prolongent ces premières surfaces d'assemblage 18 en se dirigeant vers l'extérieur de la cuve 10. Ces secondes surfaces d'assemblage 19 sont configurées pour définir entre elles, lorsqu'elles sont assemblées, un espace intérieur, ou vide, débouchant ici sur la paroi périphérique externe 16 de cette cuve 10.

Cet espace intérieur reçoit une colle d'assemblage (non représentée) apte au contact alimentaire pour solidariser les deux parties de corps 11, 12 entre elles.

Cet assemblage des deux parties de corps 11, 12 au niveau de leur section équatoriale est étanche.

Cette cuve 10 comporte également des tubes 20 pour la circulation d'un fluide froid et/ou d'un fluide chaud qui sont intégrés dans l'épaisseur des parties de corps 11, 12.

De manière avantageuse, chaque partie de corps 11, 12 comporte un seul tube 20 enroulé en spirale. Chaque tube 20 entre et sort du corps de cuve 10 au niveau de la section équatoriale de sa partie de corps 11, 12 correspondante.

Ainsi, cette cuve 10 étant montée en rotation autour d'un axe horizontal ou sensiblement horizontal passant par son centre, ces tubes 20 s'étendent coaxialement avec cet axe de rotation. Ces tubes 20 subissent ainsi seulement un mouvement de rotation et non un mouvement de translation lorsque cette cuve 10 est basculée. Il est ainsi plus simple de connecter ces tubes 20 formant saillie du corps de la cuve 10 avec des objets externes à cette dernière, tels que des circuits d'alimentation en fluide.

Cette cuve 10 comporte aussi une trappe frontale 21 ovale en acier inoxydable et une trappe d'accès ronde 22 placée à l'extrémité supérieure du corps de cuve 10. Bien entendu, cette trappe frontale 21 pourrait prendre toute autre forme et être par exemple, ronde. Elle comporte encore un robinet 23 de dégustation réalisé en acier inoxydable.

La Figure 5 est une représentation schématique d'un moule 24 utilisé pour obtenir un seul hémisphère de la cuve 10 en béton sphérique tel que décrite ci-dessus, selon un mode de réalisation particulier de la présente invention. Ce moule 24 permet ici de réaliser l'hémisphère inférieur de la cuve béton sphérique.

Ce moule 24 comporte deux parois 25, 26 de moule hémisphériques et concentriques déterminant entre elles un espace intérieur 27 pour recevoir du béton.

L'extrémité supérieure de la paroi 25 la plus externe présente une ouverture 28 de remplissage pour l'introduction d'une composition de béton dans l'espace intérieur 27.

Ces parois 25, 26 de moule sont reliées entre elles au niveau de leur section la plus large, ou section équatoriale de chaque hémisphère, par un anneau 29 de liaison.

La face interne de cet anneau 29 de liaison présente un relief de surface configuré pour déterminer la surface d'assemblage 17 de l'hémisphère 11, 12 correspondant.

Ce moule 24 est avantageusement réalisé dans une résine thermoplastique chargée en fibres de verre.

## Revendications

1. Contenant en béton pour liquide alimentaire, notamment pour l'élaboration et l'élevage de vin et de spiritueux, ledit contenant comportant un corps de contenant qui est symétrique de révolution, ledit corps comportant une paroi intérieure délimitant le volume de stockage dudit contenant et une paroi périphérique externe, **caractérisé en ce que**
- ledit corps comprend une première partie de corps (11) et une seconde partie de corps (12), lesquelles sont superposées et assemblées pour fermer ledit corps,
- chaque partie de corps (11, 12) comprend une surface d'assemblage (17) avec l'autre partie de corps (11, 12), lesdites surfaces d'assemblage étant placées en regard l'une de l'autre, lesdites surfaces d'assemblage comportant au moins :
- des premières surfaces d'assemblage (18) placées du côté de ladite paroi intérieure, lesdites premières surfaces présentant des profils conjugués l'un de l'autre pour assurer un contact continu entre lesdites premières surfaces, et
- lesdites premières surfaces d'assemblage (18) étant prolongées en allant vers l'extérieur dudit contenant par des secondes surfaces d'assemblage (19) configurées pour définir entre elles, un espace intérieur débouchant ou non sur ladite paroi périphérique externe.

2. Contenant selon la revendication 1, **caractérisé en ce qu'**il comporte deux parties de corps de contenant assemblées entre elles, chaque partie de corps (11, 12) étant d'une seule pièce.

3. Contenant selon la revendication 1 ou 2, **caractérisé en ce qu'**une colle d'assemblage est disposée dans ledit espace intérieur.

4. Contenant selon la revendication 3, **caractérisé en ce que** ladite colle d'assemblage est une colle apte au contact alimentaire.

5. Contenant selon la revendication 1 ou 2, **caractérisé en ce qu'**un élément d'étanchéité est placé dans ledit espace intérieur.

6. Contenant selon l'une quelconque des revendications précédentes, **caractérisé en ce que** ladite paroi périphérique externe dudit contenant comporte au moins une rainure circonférentielle, ladite au moins une rainure étant placée au niveau desdites surfaces d'assemblage en définissant un logement, chaque logement recevant un moyen de serrage, de préférence amovible, tel qu'un cerclage, pour l'assemblage des deux parties de corps.

7. Contenant selon l'une quelconque des revendications précédentes, **caractérisé en ce que** ledit corps est sphérique.

8. Contenant selon l'une quelconque des revendications précédentes, **caractérisé en ce qu'**une première surface d'une première partie de corps (11) est en creux ou en retrait par rapport à sa seconde surface tandis que la première surface de l'autre partie de corps est en saillie par rapport à sa seconde surface, la première surface en saillie ayant un profil conjugué de celui de ladite première surface en creux de manière à coopérer avec cette première surface en creux pour l'assemblage desdites parties de corps.

9. Contenant selon l'une quelconque des revendications précédentes, **caractérisé en ce que** lesdites premières surfaces sont en coupe, ou section, transversale dudit contenant, en forme de marche ou de forme ondulée.

10. Contenant selon l'une quelconque des revendications précédentes, **caractérisé en ce que** lesdites surfaces d'assemblage (17) sont configurées de sorte qu'au moins les parois intérieures desdites parties de corps sont affleurantes de manière à assurer la continuité de ladite paroi intérieure dudit contenant.

11. Contenant selon l'une quelconque des revendications précédentes, **caractérisé en ce qu'**il comporte un ou plusieurs conduits pour la circulation d'un fluide de refroidissement et/ou d'un fluide chaud disposés au moins en partie sur la surface externe de chaque partie de corps (11, 12) et/ou intégrés au moins en partie dans l'épaisseur de chaque partie de corps (11, 12).

12. Contenant selon l'une quelconque des revendications précédentes, **caractérisé en ce qu'**il comprend un ou plusieurs éléments choisis dans le groupe comprenant un capteur, un capteur de température, une conduite d'un circuit d'alimentation en fluide chauffant ou de refroidissement, ces éléments étant de préférence intégrés dans l'épaisseur de chaque partie de corps (11, 12).

13. Ensemble comprenant un contenant selon l'une quelconque des revendications 1 à 12 et un socle (13) pour supporter le corps dudit contenant, ce socle ayant une section transversale triangulaire

14. Ensemble comprenant un contenant selon l'une quelconque des revendications 1 à 12, ledit contenant comprenant au moins un dispositif de couplage solidaire de la paroi périphérique externe du corps de ce contenant, un dispositif d'entrainement en rotation de ce contenant, un ou plusieurs éléments de guidage en rotation dudit au moins un dispositif de couplage et une base pour supporter en rotation ledit contenant et recevoir ledit au moins un dispositif d'entraînement en rotation.

15. Moule pour la fabrication en béton d'une partie de corps (11, 12) d'un contenant selon l'une quelconque des revendications 1 à 12, **caractérisé en ce que** ledit moule comporte deux parois (25, 26) de moule hémisphériques et concentriques déterminant entre elles un espace intérieur pour recevoir ledit béton, lesdites parois (25 , 26) de moule étant reliées entre elles au niveau de leur section la plus large, ou section équatoriale de chaque hémisphère, par un anneau de liaison (29), la face interne dudit anneau de liaison (29) présentant un relief de surface configuré pour déterminer lesdites surfaces d'assemblage (18, 19) de ladite partie de moule correspondante.

16. Moule selon la revendication 15, **caractérisé en ce que** au moins lesdites deux parois (25, 26) de moule sont réalisées à partir d'une résine thermoplastique renforcée de fibres de verre.

## Patentansprüche

1. Betonbehälter für flüssige Nahrungsmittel, insbesondere für die Herstellung und den Ausbau von Wein und Spirituosen, wobei der Behälter einen Behälterkörper aufweist, der rotationssymmetrisch ist, wobei der Körper eine Innenwand aufweist, die das Lagervolumen des Behälters begrenzt, und eine äußere Umfangswand aufweist, **dadurch gekennzeichnet, dass**
- der Körper einen ersten Teil des Körpers (11) und einen zweiten Teil des Körpers (12) umfasst, die übereinander liegen und zum Verschließen des Körpers zusammengefügt sind,
- jeder Teil des Körpers (11, 12) eine Verbindungsfläche (17) mit dem anderen Teil des Körpers (11, 12) umfasst, wobei die Verbindungsflächen einander gegenüberliegend angeordnet sind, wobei die Verbindungsflächen wenigstens umfassen:
- erste Verbindungsflächen (18), die auf der Seite der Innenwand angeordnet sind, wobei die ersten Flächen Profile aufweisen, die zueinander passen, um einen kontinuierlichen Kontakt zwischen den ersten Flächen zu gewährleisten, und
- wobei die ersten Verbindungsflächen (18) in Richtung der Außenseite des Behälters durch zweite Verbindungsflächen (19) verlängert sind, die dazu ausgebildet sind, zwischen sich einen Innenraum zu begrenzen, der an der äußeren Umfangswand mündet oder nicht dort mündet.

2. Behälter nach Anspruch 1, **dadurch gekennzeichnet, dass** er zwei miteinander verbundene Teile des Körpers des Behälters umfasst, wobei jeder Teil des Körpers (11, 12) aus einem einzigen Stück besteht.

3. Behälter nach Anspruch 1 oder 2, **dadurch gekennzeichnet, dass** ein Verbindungskleber in dem Innenraum angeordnet ist.

4. Behälter nach Anspruch 3, **dadurch gekennzeichnet, dass** der Verbindungskleber ein Kleber ist, der für den Kontakt mit Lebensmitteln geeignet ist.

5. Behälter nach Anspruch 1 oder 2, **dadurch gekennzeichnet, dass** ein Dichtungselement in dem Innenraum angeordnet ist.

6. Behälter nach einem der vorhergehenden Ansprüche, **dadurch gekennzeichnet, dass** die äußere Umfangswand des Behälters wenigstens eine umlaufende Nut aufweist, wobei die wenigstens eine Nut an den Verbindungsflächen angeordnet ist, und eine Aufnahme begrenzt, wobei jede Aufnahme ein vorzugsweise abnehmbares Spannmittel, wie z.B. eine Umreifung, zum Verbinden der beiden Teile des Körpers aufnimmt.

7. Behälter nach einem der vorhergehenden Ansprüche, **dadurch gekennzeichnet, dass** der Körper kugelförmig ist.

8. Behälter nach einem der vorhergehenden Ansprüche, **dadurch gekennzeichnet, dass** eine erste Fläche eines ersten Teils des Körpers (11) in Bezug auf seine zweite Fläche vertieft oder zurückgesetzt ist, während die erste Fläche des anderen Teils des Körpers in Bezug auf seine zweite Fläche vorspringt, wobei die erste vorspringende Fläche ein Profil aufweist, das mit dem der ersten vertieften Fläche verknüpft ist, um mit dieser ersten vertieften Fläche beim Zusammenbau der Teile des Körpers zusammenzuwirken.

9. Behälter nach einem der vorhergehenden Ansprüche, **dadurch gekennzeichnet, dass** die ersten Flächen im Schnitt oder Querschnitt des Behälters stufenförmig oder wellenförmig sind.

10. Behälter nach einem der vorhergehenden Ansprüche, **dadurch gekennzeichnet, dass** die Verbindungsflächen (17) derart ausgebildet sind, dass wenigstens die Innenwände der Teile des Körpers bündig sind, um die Kontinuität der Innenwand des Behälters zu gewährleisten.

11. Behälter nach einem der vorhergehenden Ansprüche, **dadurch gekennzeichnet, dass** er eine oder mehrere Leitungen für die Zirkulation eines Kühlfluids und/oder eines Heizfluids aufweist, die wenigstens teilweise an der Außenfläche jedes Teils des Körpers (11, 12) angeordnet und/oder wenigstens teilweise in die Dicke jedes Teils des Körpers (11, 12) integriert sind.

12. Behälter nach einem der vorhergehenden Ansprüche, **dadurch gekennzeichnet, dass** er ein oder mehrere Elemente umfasst, die aus der Gruppe gewählt sind, umfassend einen Sensor, einen Temperatursensor, eine Leitung eines Kreislaufs zur Zufuhr eines Heiz- oder Kühlmediums, wobei diese Elemente vorzugsweise in die Dicke jedes Teils des Körpers (11, 12) integriert sind.

13. Anordnung, umfassend einen Behälter nach einem der Ansprüche 1 bis 12 und einen Sockel (13) zum Tragen des Körpers des Behälters, wobei der Sockel einen dreieckigen Querschnitt aufweist.

14. Anordnung, umfassend einen Behälter nach einem der Ansprüche 1 bis 12, wobei der Behälter wenigstens eine Kupplungsvorrichtung, die mit der äußeren Umfangswand des Körpers dieses Behälters fest verbunden ist, eine Drehantriebsvorrichtung dieses Behälters, ein oder mehrere Elemente zur Drehführung der wenigstens einen Kupplungsvorrichtung und einen Sockel zur drehbaren Abstützung des Behälters und zur Aufnahme der wenigstens einen Drehantriebsvorrichtung aufweist.

15. Form zur Herstellung eines Teils des Körpers (11, 12) eines Behälters nach einem der Ansprüche 1 bis 12 aus Beton, **dadurch gekennzeichnet, dass** die Form zwei halbkugelförmige und konzentrische Formwände (25, 26) aufweist, die dazwischen einen Innenraum zur Aufnahme des Betons bestimmen, wobei die Formwände (25, 26) an ihrem breitesten Abschnitt oder Äquatorialabschnitt jeder Halbkugel durch einen Verbindungsring (29) miteinander verbunden sind, wobei die Innenseite des Verbindungsrings (29) ein Oberflächenrelief aufweist, welches dazu ausgebildet ist, die Verbindungsflächen (18, 19) des entsprechenden Formteils festzulegen.

16. Form nach Anspruch 15, **dadurch gekennzeichnet, dass** wenigstens die beiden Formwände (25, 26) aus einem glasfaserverstärkten thermoplastischen Harz hergestellt sind.

## Claims

1. A concrete container for a food liquid, particularly for making and aging wine and spirits, said container comprising a container body which exhibits symmetry of revolution, said body comprising an interior wall delimiting the storage volume of said container and an external peripheral wall, **characterized in that**
- said body comprises a first body part (11) and a second body part (12), which parts are superposed and assembled to close said body,
- each body part (11, 12) comprises an assembly surface (17) for assembly with the other body part (11, 12), said assembly surfaces being placed facing one another, said assembly surfaces comprising at least:
- first assembly surfaces (18) placed on the side of said interior wall, said first surfaces exhibiting profiles that mate with one another to ensure continuous contact between said first surfaces, and
- said first assembly surfaces (18) being extended in the direction toward the outside of said container by second assembly surfaces (19) configured to define between them an interior space that may or may not open onto said external peripheral wall.

2. The container as claimed in claim 1, **characterized in that** it comprises two container body parts assembled with one another, each body part (11, 12) being of a single piece.

3. The container as claimed in claim 1 or 2, **characterized in that** an assembly adhesive is placed in said interior space.

4. The container as claimed in claim 3, **characterized in that** said assembly adhesive is an adhesive suitable for food contact.

5. The container as claimed in claim 1 or 2, **characterized in that** a sealing element is placed in said interior space.

6. The container as claimed in any one of the preceding claims, **characterized in that** said external peripheral wall of said container comprises at least one circumferential channel, said at least one channel being positioned at the level of said assembly surfaces and defining a housing, each housing accepting a clamping means, preferably removable, such as banding, for assembling the two body parts.

7. The container as claimed in any one of the preceding claims, **characterized in that** said body is spherical.

8. The container as claimed in any one of the preceding claims, **characterized in that** a first surface of a first body part (11) is recessed or set back with respect to its second surface, whereas the first surface of the other body part projects with respect to its second surface, the projecting first surface having a profile that mates with that of said recessed first surface so as to cooperate with this recessed first surface for assembling said body parts.

9. The container as claimed in any one of the preceding claims, **characterized in that** said first surfaces are, when said container is viewed in transverse section or cross section, in the form of steps or of corrugated shape.

10. The container as claimed in any one of the preceding claims, **characterized in that** said assembly surfaces (17) are configured in such a way that at least the interior walls of said body parts are flush with one another so as to ensure the continuity of said interior wall of said container.

11. The container as claimed in any one of the preceding claims, **characterized in that** it comprises one or more ducts for the circulation of a cooling fluid and/or of a hot fluid and which are arranged at least in part on the external surface of each body part (11, 12) and/or at least in part incorporated into the thickness of each body part (11, 12).

12. The container as claimed in any one of the preceding claims, **characterized in that** it comprises one or several elements selected from the group comprising a sensor, a temperature sensor, a conduit of a circuit supplying heating or cooling fluid, these elements preferably being incorporated into the thickness of each body part (11, 12).

13. An assembly comprising a container as claimed in any one of claims 1 to 12 and a stand (13) for supporting the body of said container, this stand having a triangular transverse section.

14. An assembly comprising a container as claimed in any one of claims 1 to 12, said container comprising at least one coupling device solid with the external peripheral wall of the body of this container, a device for driving this container in rotation, one or more guide elements for guiding the rotation of said at least one coupling device, and a base for rotationally supporting said container and accepting said at least one rotational-drive device.

15. A mold for manufacturing in concrete a body part (11, 12) of a container as claimed in any one of claims 1 to 12, **characterized in that** said mold comprises two hemispherical and concentric mold walls (25, 26) between them determining an interior space to receive said concrete, said mold walls (25, 26) being joined together at their largest section, or equatorial section of each hemisphere, by a connecting ring (29), the internal face of said connecting ring (29) having a surface relief configured to determine said assembly surfaces (18, 19) of said corresponding mold part.

16. The mold as claimed in claim 15, **characterized in that** at least said two mold walls (25, 26) are made from a glass fiber-reinforced thermoplastic resin.
